(19) Europäisches Patentamt
European Patent Office
Office européen des brevets

(11) **EP 1 605 175 B1**

(12) **EUROPÄISCHE PATENTSCHRIFT**

(45) Veröffentlichungstag und Bekanntmachung des Hinweises auf die Patenterteilung:
**21.09.2016   Patentblatt 2016/38**

(51) Int Cl.:
*F16C 33/46* (2006.01)      *F16C 19/26* (2006.01)
*F16C 33/54* (2006.01)

(21) Anmeldenummer: **05012077.3**

(22) Anmeldetag: **04.06.2005**

(54) **Zylinderrollenlager mit einem Fensterkäfig**

Cylindrical roller bearing with window-shaped cage

Roulement à rouleaux cylindriques avec une cage en forme de fenêtre

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **11.06.2004   DE 102004028376**

(43) Veröffentlichungstag der Anmeldung:
**14.12.2005   Patentblatt 2005/50**

(73) Patentinhaber: **AB SKF**
**415 50 Göteborg (SE)**

(72) Erfinder:
• **Reichert, Jürgen**
**97499 Donnersdorf (DE)**
• **Heemskerk, Rut**
**97490 Poppenhausen-Kützberg (DE)**
• **Weidinger, Alfred**
**97464 Niederwerrn (DE)**
• **Stanzel, Rainer**
**97447 Gerolzhofen (DE)**
• **Olma, Hartwig**
**97422 Schweinfurt (DE)**

(74) Vertreter: **Kohl, Thomas**
**SKF GmbH**
**Gunnar-Wester-Strasse 12**
**97421 Schweinfurt (DE)**

(56) Entgegenhaltungen:
EP-A1- 0 379 869        DE-A1- 3 327 623
DE-A1- 4 133 443        DE-A1- 19 835 261
DE-B- 1 001 550         DE-B- 1 009 445
DE-B- 1 082 087         DE-U- 1 829 610
JP-A- 2003 028 165      US-A1- 2004 037 484

EP 1 605 175 B1

**Beschreibung**

Die Erfindung betrifft ein Zylinderrollenlager.

Käfige erfüllen in Wälzlagern vielfältige Aufgaben. Sie halten die Wälzkörper zwischen den Laufbahnen, sie verhindern ein Berühren der Wälzkörper untereinander, sie halten die Wälzkörper in sich fest, sie führen die Wälzkörper, sie beeinflussen die Lagerdrehzahl sowie die Lagerschmierung und/oder dämpfen Schwingungen.

Aus der DE 18 29 610 U ist ein hohlzylinderförmiger Blechkäfig für Nadel- oder Rollenlager gemäß dem Oberbegriff das unabhängigen Anspruchs 1 bekannt, welcher die Wälzkörper einzeln in Taschen aufnimmt und mit diesen eine einbaufertige Einheit bildet. Dabei ist der sich beiderseits des Wälzkörperteilkreises erstreckende Käfig derart gestaltet, dass die darin eingefederten Wälzkörper radial nach innen und außen am Herausfallen gehindert sind. Weiterhin ist der Käfig aus einem Blechstreifen gebogen ausgebildet, wobei die Stoßstelle verlötet oder verscheißt ist.

Eine Aufgabe der Erfindung ist es, ein verbessertes Zylinderrollenlager mit einem Fensterkäfig zu schaffen, so dass ein kostengünstiger Aufbau mit hochwertigen Lagereigenschaften einhergeht.

Diese Aufgabe wird durch den Gegenstand des Anspruchs 1 gelöst. Vorteilhafte Ausgestaltungen sind in den Unteransprüchen beschrieben.

Die Erfindung beruht dabei auf der Erkenntnis, dass durch die Merkmale des Anspruchs 1, dass der Käfig frei von Mitteln für ein verliersicheres Halten der Rollen im Käfig und sich zwischen zwei benachbarten Rollen vom Rollenteilkreis aus nach innen oder außen erstreckend ausgebildet ist, insbesondere hinsichtlich Käfig und auch Rollen ein sehr einfacher und damit auch kostengünstiger Aufbau gewählt ist, und in Verbindung mit den weiteren Merkmalen des Anspruchs 1 trotzdem hinsichtlich Geräuschentwicklung, Verschleiß und auch Notlaufeigenschaften besonders günstige Ergebnisse erzielbar sind.

Weitere Vorteile, Merkmale und Einzelheiten der Erfindung ergeben sich aus dem im folgenden beschriebenen Ausführungsbeispiel der Erfindung anhand der Figuren. Dabei zeigen:

Figur 1    einen Querschnitt durch einen Käfig eines Rollenlagers,

Figur 2    einen Längsschnitt des Käfigs der Figur 1 und

Figur 3    ausschnittsweise eine Seitenansicht eines weiteren Käfigs eines Zylinderrollenlagers.

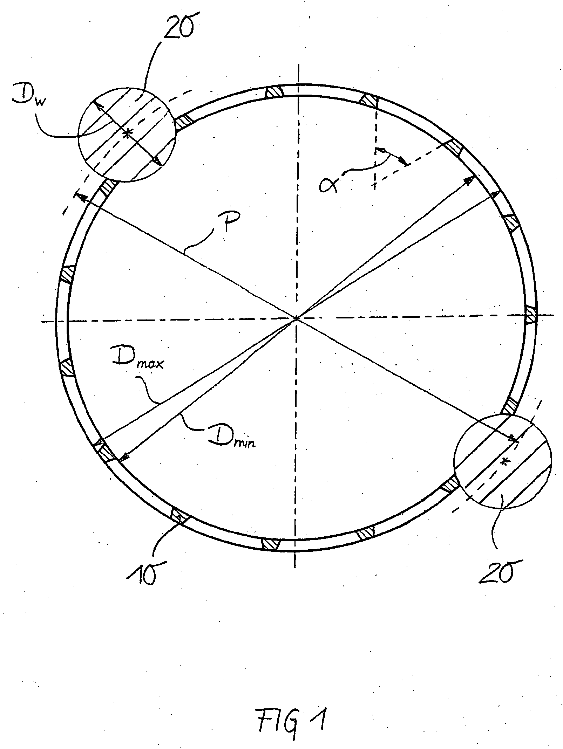

Die Figur 1 zeigt als ein Ausführungsbeispiel der Erfindung einen Querschnitt durch ein Rollenlager mit einem Käfig 10. Aus Gründen der Übersichtlichkeit sind lediglich zwei zylinderartige Rollen 20 dargestellt und es ist auf eine Darstellung des Innen- und Außenrings des Rollenlagers verzichtet. Das Rollenlager kann dabei als N-, NU- oder NJ-Lager oder gemäß jedwedem anderen möglichen Lagerdesign ausgebildet sein.

Der Käfig 10 ist dabei frei von Mitteln für ein verliersicheres Halten der Rollen 20 im Käfig 10 ausgebildet, d.h. er besitzt weder Mittel zum Einschnappen der Rollen 20 in den Käfig 10 noch an den Taschenstirnseiten ausgebildete Dimpel zum Eingreifen in Rollen mit stirnseitigen Vertiefungen. Dies bedingt beispielsweise, dass für eine Lieferung und Montage des Käfigs 10 mit darin eingesetzten Rollen 20 samt dem Innenring eine die Rollen 20 umgebende Montagehülse notwendig ist, damit die Rollen 20 nicht herausfallen. In anderen Ausführungen ist dazu mit gleicher Wirkungsweise auch ein Sprengring verwendbar, der am Rand einer Laufbahn des Innen- oder Außenrings in den Innen- oder Außenring einsetzbar ist. Dabei wird in manchen Ausführungen der Sprengring gleichzeitig als ein Führungsbord genutzt.

Der Käfig 10 ist weiterhin derart ausgebildet, dass er sich zwischen zwei benachbarten Rollen 20 ausschließlich in einem vom Teilkreis nach innen hin gerichteten Bereich mit einem im wesentlichen trapezförmigen Querschnitt erstreckt. Auf Höhe des Teilkreises befindet sich somit zwischen zwei benachbarten Rollen 20 kein Käfigsteg.

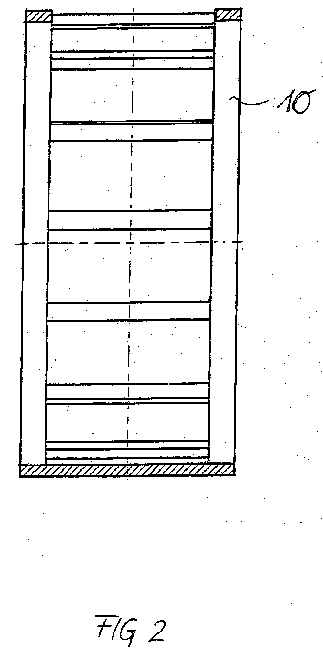

Die Figur 2 zeigt einen Längsschnitt durch den Käfig 10. Die untere Schnittfläche in der Figur 2 zeigt das Profil des Käfigs 10, das im hier beschriebenen Ausführungsbeispiel stabartig glatt ausgebildet ist. In anderen Ausführungsformen kann der Käfig 10 an einem oder an beiden seiner axialen Enden nach innen und/oder außen hin ringartig verdickt ausgebildet sein, so dass sich ein L- oder U-förmiges Profil ergibt.

Der Käfig 10 ist weiterhin derart gestaltet, dass ein Öffnungswinkel $\alpha$ einer Käfigtasche im Bogenmaß nachfolgender Dimensionierung entspricht:

$$\pi - 2 \cdot \arccos \frac{P^2 + D_W^2 - D_{max}^2}{2 \cdot D_W \cdot P} \le \alpha \le \pi - 2 \cdot \arccos \frac{P^2 + D_W^2 - D_{min}^2}{2 \cdot D_W \cdot P},$$

insbesondere

$$\frac{36}{35}\pi - 2 \cdot \arccos \frac{P^2 + D_W^2 - D_{max}^2}{2 \cdot D_W \cdot P} \leq \alpha \leq \frac{35}{36}\pi - 2 \cdot \arccos \frac{P^2 + D_W^2 - D_{min}^2}{2 \cdot D_W \cdot P} \; ;$$

wobei

für den Rollenteilkreisdurchmesser P, den Rollendurchmesser $D_W$, den Käfiginnendurchmesser $D_{min}$ und den Käfigaußendurchmesser $D_{max}$ deren mm-Werte als dimensionslose Größen einzusetzen sind. Durch vorgenannte Dimensionierung wird dabei sichergestellt, dass zwischen den Rollen 20 und Führungsflächen des Käfigs 10 immer ein tangentialer Kontakt auftritt. Die vorgenannte erste Dimensionierungsvorschrift gilt dabei insbesondere für eine Ausbildung des Käfigs 10 nahezu ohne Spiel bzw. für ein Lager das im wesentlichen frei von Toleranzen und/oder Lagerlüften ausgebildet ist. Die vorgenannte zweite Dimensionierungsvorschrift berücksichtigt diejenige Ausbildung, bei der der Käfig 10 bei Betrieb ein Käfigspiel aufweist, das heißt, dass sich die Kontaktpunkte zwischen den Rollen 20 und dem Käfig 10 in Grenzen verändern können. Dabei wird durch die zweite Dimensionierungsvorschrift, die gegenüber der ersten enger ist, ein unerwünschter nicht tangentialer Kontakt und damit einhergehend ein Abstreifen eines Schmierstoffs sicher verhindert.

In einer anderen Ausführungsform, bei der sich ein Käfig zwischen benachbarten Rollen ausschließlich in einem vom Rollenteilkreis nach außen hin gerichteten Bereich erstreckt, gehorcht der Öffnungswinkel $\alpha$ einer Käfigtasche im Bogenmaß nachfolgender Dimensionierung:

$$2 \cdot \arccos \frac{P^2 + D_W^2 - D_{min}^2}{2 \cdot D_W \cdot P} - \pi \leq \alpha \leq 2 \cdot \arccos \frac{P^2 + D_W^2 - D_{max}^2}{2 \cdot D_W \cdot P} - \pi \; ,$$

insbesondere

$$2 \cdot \arccos \frac{P^2 + D_W^2 - D_{min}^2}{2 \cdot D_W \cdot P} - \frac{36}{37}\pi \leq \alpha \leq 2 \cdot \arccos \frac{P^2 + D_W^2 - D_{max}^2}{2 \cdot D_W \cdot P} - \frac{37}{36}\pi \; ;$$

wobei

für den Rollenteilkreisdurchmesser P, den Rollendurchmesser $D_W$, den Käfiginnendurchmesser $D_{min}$ und den Käfigaußendurchmesser $D_{max}$ wiederum deren mm-Werte als dimensionslose Größen einzusetzen sind.

Der Käfig 10 der Figuren 1 und 2 ist weiterhin derart ausgebildet ist, dass bei einer gleichmäßigen Verteilung der Rollen auf dem Rollenteilkreis ein minimaler Rollenabstand $RA_{min}$ nachfolgender Dimensionierung entspricht:

$$RA_{min} \leq 0,13 \cdot (\log_{10}(P \cdot D_W))^{2,7} \; ;$$

wobei

für den Rollenteilkreisdurchmesser P und den Rollendurchmesser $D_W$ deren mm-Werte als dimensionslose Größen einzusetzen sind. Vorgenannte das Design des Käfigs 10 mitbestimmende Dimensionierung bezieht sich wie gesagt auf eine angenommene gleichmäßige Verteilung der Rollen 20 auf dem Rollenteilkreis. Nach Einbau des Käfigs 10 und der Rollen 20 in das Lager findet sich besagter Abstand zwischen den Rollen 20 so in der Regel nicht wieder.

Weiterhin ist der Käfig 10 derart gestaltet, dass eine Anzahl von Rollen 20 einem auf eine ganze Zahl abgerundeten Wert Z plus wenigstens einer weiteren Rolle 20 entspricht, wobei

$$Z = \frac{\pi}{\arcsin \frac{2 \cdot X + Y + W}{P}}$$

mit

$$X = 0,16 \cdot \sqrt{D_W} \; ,$$

Y = 0,55, falls 0,06·$D_W$ ≤ 0,5, ansonsten Y = 0,06·$D_W$ und

$$W = 0{,}021 \cdot \sqrt[3]{D_W + P} + D_W \, ;$$

wobei

für den Rollenteilkreisdurchmesser P und den Rollendurchmesser $D_W$ deren mm-Werte als dimensionslose Größen einzusetzen sind. Dadurch kommt man in die Nähe eines vollrollig ausgebildeten vergleichbaren Lagers, so dass eine Tragfähigkeit des Lagers mit Vorteil groß ist, verhindert aber sicher ein gegenseitiges Berühren der Rollen 20, so dass negative Eigenschaften eines vollrolligen Lagers, wie eine Eignung nur für geringe Drehzahlen infolge eines gegenseitigen Kontakts der Rollen und der damit einhergehenden Gefahr von Anschmierungen, ausgeschlossen sind.

Das Lager der Figuren 1 und 2 kann für eine reine Schulterführung des Käfigs 10 an wenigstens einer Schulter des Innen- und/oder Außenrings des Lagers, für eine Rollenführung oder für eine Mischführung, die uneindeutig zwischen reiner Schulterführung und reiner Rollenführung liegt, ausgebildet sein. Auf alle Fälle ist aber das Lager derart gestaltet, dass ein auf Durchmessergrößen zu beziehendes Spiel Sc des Käfigs 10 als mm-Wert nachfolgender Dimensionierung entspricht:

$$0{,}005 \cdot \left( \log_{10} \left( P \cdot D_W \right) \right)^{2{,}55} \leq S_C \leq 0{,}1 \cdot \left( \log_{10} \left( P \cdot D_W \right) \right)^{2{,}55} \, ;$$

wobei

für den Rollenteilkreisdurchmesser P und den Rollendurchmesser $D_W$ deren mm-Werte als dimensionslose Größen einzusetzen sind. Dadurch wir mit Vorteil ein Überrollen des Käfigs 10 durch die Rollen 20 sicher unterbunden.

Der Käfig 10 der Figuren 1 und 2 ist einstückig aus einem Stahl hergestellt. Dazu wird zunächst ein ringartiger Rohling ohne die Käfigtaschen benötigt, der beispielsweise durch Abschneiden von einem Rohr, einem Tiefziehprozess, einer Verschweißung eines Blechs und/oder durch Drehoperationen hergestellt sein kann. Anschließend werden die Käfigtaschen durch einen Fräs-, Stanz- oder Strahlprozess, beispielsweise mittels eines Laser- oder Wasserstrahls hergestellt. In Abhängigkeit vom Verfahren zum Erzeugen der Käfigtaschen wird ein integrierter Kalibrierprozess vor- oder nachgeschaltet.

Insbesondere für vergleichsweise kleine Stückzahlen ist eine Taschenerzeugung durch Laserstrahlschneiden vorteilhaft, da keine typenspezifischen Spezialwerkzeuge, wie beim Stanzen benötigt werden. Der mittels Laserschneiden erzeugte Käfig 10 wird entgratet und kann einer weiteren Nachbehandlung, beispielsweise aus Verschleiß- oder Festigkeitsgründen einem Beschichten oder Härten, zugeführt werden. Ebenso ist es für kleine Stückzahlen von Vorteil, den Rohling durch ein Verschweißen von Stahlblechen herzustellen, da damit beliebige Käfigdurchmesser ohne käfigtypenspezifische Spezialwerkzeuge herstellbar sind.

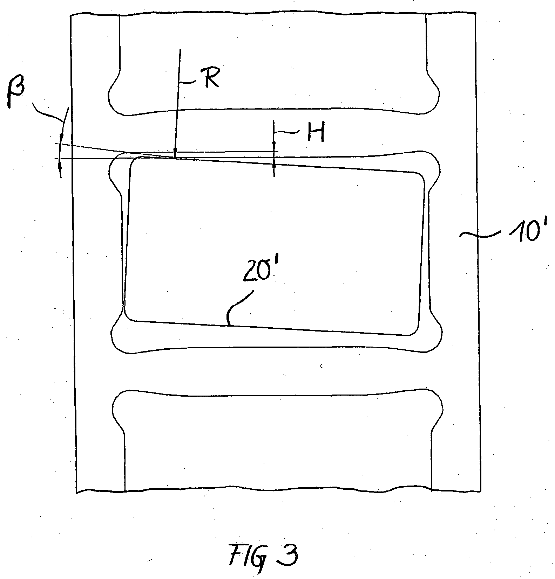

Die Figur 3 zeigt als ein weiteres Ausführungsbeispiel der Erfindung in Form einer Prinzipskizze ausschnittsweise eine Seitenansicht eines weiteren Käfigs 10' eines Zylinderrollenlagers. Dabei sind die Taschen des Käfigs 10' in ihren axialen Endbereichen gegenüber einem Mittenbereich, in Umfangsrichtung gemessen, verbreitert ausgebildet. Dabei sind die Verbreiterungen trichter- bzw. trompetenartig ausgebildet. Eine Krümmung des Trichters bzw. der Trompete ist dabei derart gewählt, dass auch bei maximaler Schrägstellung der Rolle 20' in der Tasche ein Berühren eines Bereichs der Rolle 20', in dem die Rolle 20' in eine ihrer Stirnflächen übergeht, verhindert wird. Dabei ist die maximale Schrägstellung bzw. Schränkung der Rolle 20' durch deren geometrische Ausbildung sowie einem Abstand zweier einander gegenüberliegender Borde von Innen- und/oder Außenring des Zylinderrollenlagers bestimmt. In einer anderen Ausführungsform kann die maximale Schrägstellung bzw. Schränkung der Rolle auch durch das Taschenspiel des Käfigs bestimmt sein. Obwohl der Bereich der Rolle 20', in dem die Rolle 20' in eine ihrer Stirnflächen übergeht, mit einem kleinen Radius abgerundet gestaltet ist, würde ein Anlaufen des besagten Bereichs am Käfigsteg in an sich unerwünschter Weise zu Spannungsspitzen und daraus resultierend zu einem Verschleiß von Rolle 20' und Käfig 10' führen, was durch die Ausgestaltung der Tasche gemäß der Figur 3 sicher verhindert wird.

Ein Radius R der Krümmung, ein Winkel β und ein Hinterschnitt H sind dabei derart gewählt, dass bei maximaler Schränkung der Rolle 20' der abgerundete Bereich der Rolle 20', in dem die Rolle 20' in ihre Stirnflächen übergeht, den Käfigsteg nicht berührt. Dabei ist der Radius R derart groß gewählt, dass nicht nur besagtes scharfkantiges Anlaufen vermieden wird, sondern gleichzeitig durch eine große Schmiegung zwischen den sich berührenden Oberflächen von Rolle 20' und Käfigsteg ein tangentialer Anlauf mit kleinen Oberflächenspannungen erzeugt wird. Weiterhin ist der Käfig 10' im besagten Mittenbereich mit einem Öffnungswinkel der Käfigtaschen ausgebildet, wie dies vorausgehend zu den Figuren 1 und 2 beschrieben ist, wodurch ein tangentialer Kontakt zwischen der Rolle 20' und den Käfigstegen sichergestellt ist, so lange der Käfig 10' und die Rolle 20' achsparallel zueinander angeordnet sind. Auch das weitere anhand der Figuren 1 und 2 Beschriebene gilt für den Käfig 10' der Figur 3 entsprechend.

**Bezugszeichenliste**

| | |
|---|---|
| 10, 10' | Käfig |
| 20, 20' | Rolle |
| $D_W$ | Rollendurchmesser |
| $D_{min}$ | Käfiginnendurchmesser |
| $D_{max}$ | Käfigaußendurchmesser |
| H | Hinterschnitt |
| P | Rollenteilkreisdurchmesser |
| R | Radius |
| $\alpha$ | Öffnungswinkel einer Käfigtasche |
| $\beta$ | Winkel |

**Patentansprüche**

1. Zylinderrollenlager mit einem Fensterkäfig (10, 10'), beinhaltend folgende Merkmale:

   - der Käfig (10, 10') ist einstückig und radial in sich geschlossen ausgebildet,
   - der Käfig (10, 10') ist derart gestaltet, dass ein gegenseitiges Berühren der Rollen (20, 20') verhindert ist, und
   - das Zylinderrollenlager ist derart ausgebildet, dass der derart ausgebildete Käfig (10, 10') frei von einem Verformen oder Auftrennen in das Zylinderrollenlager einbaubar ist,

   **dadurch gekennzeichnet, dass**

   - der Käfig (10, 10') frei von Mitteln für ein verliersicheres Halten der Rollen (20, 20') im Käfig (10, 10') ist, und
   - der Käfig (10, 10') sich zwischen zwei benachbarten Rollen (20, 20') ausschließlich in einem vom Rollenteilkreis nach außen oder innen hin gerichteten Bereich mit einem trapezförmigen Querschnitt erstreckt.

2. Zylinderrollenlager nach Anspruch 1, wobei ein Öffnungswinkel $\alpha$ einer Käfigtasche bei einem Käfig (10, 10'), der sich zwischen benachbarten Rollen (20, 20') ausschließlich in einem vom Rollenteilkreis nach innen hin gerichteten Bereich erstreckt, im Bogenmaß nachfolgender Dimensionierung entspricht:

$$\pi - 2 \cdot \arccos \frac{P^2 + D_W^2 - D_{\max}^2}{2 \cdot D_W \cdot P} \leq \alpha \leq \pi - 2 \cdot \arccos \frac{P^2 + D_W^2 - D_{\min}^2}{2 \cdot D_W \cdot P},$$

   insbesondere

$$\tfrac{36}{35}\pi - 2 \cdot \arccos \frac{P^2 + D_W^2 - D_{\max}^2}{2 \cdot D_W \cdot P} \leq \alpha \leq \tfrac{35}{36}\pi - 2 \cdot \arccos \frac{P^2 + D_W^2 - D_{\min}^2}{2 \cdot D_W \cdot P};$$

   wobei
   für den Rollenteilkreisdurchmesser P, den Rollendurchmesser $D_W$, den im Einsetzbereich der Rollen (20, 20') genommenen Käfiginnendurchmesser $D_{min}$ und den im Einsetzbereich der Rollen (20, 20') genommenen Käfigaußendurchmesser $D_{max}$ deren mm-Werte als dimensionslose Größen einzusetzen sind.

3. Zylinderrollenlager nach Anspruch 1, wobei ein Öffnungswinkel $\alpha$ einer Käfigtasche bei einem Käfig (10, 10'), der sich zwischen benachbarten Rollen (20, 20') ausschließlich in einem vom Rollenteilkreis nach außen hin gerichteten Bereich erstreckt, im Bogenmaß nachfolgender Dimensionierung entspricht:

$$2 \cdot \arccos \frac{P^2 + D_w^2 - D_{min}^2}{2 \cdot D_w \cdot P} - \pi \leq \alpha \leq 2 \cdot \arccos \frac{P^2 + D_w^2 - D_{max}^2}{2 \cdot D_w \cdot P} - \pi,$$

insbesondere

$$2 \cdot \arccos \frac{P^2 + D_w^2 - D_{min}^2}{2 \cdot D_w \cdot P} - \frac{36}{37}\pi \leq \alpha \leq 2 \cdot \arccos \frac{P^2 + D_w^2 - D_{max}^2}{2 \cdot D_w \cdot P} - \frac{37}{36}\pi \; ;$$

wobei
für den Rollenteilkreisdurchmesser P, den Rollendurchmesser $D_w$, den im Einsetzbereich der Rollen (20, 20') genommenen Käfiginnendurchmesser $D_{min}$ und den im Einsetzbereich der Rollen (20, 20') genommenen Käfigaußendurchmesser $D_{max}$ deren mm-Werte als dimensionslose Größen einzusetzen sind.

4. Zylinderrollenlager nach einem der Ansprüche 1 bis 3, wobei der Käfig (10, 10') aus einem Stahl ist.

5. Zylinderrollenlager nach einem der Ansprüche 1 bis 4, wobei der Käfig (10, 10') derart gestaltet ist, dass ein unmittelbarer Kontakt zweier benachbarter Rollen (20, 20') sicher verhindert wird.

6. Zylinderrollenlager nach einem der Ansprüche 1 bis 5, wobei der Käfig (10, 10') derart ausgebildet ist, dass bei gleichmäßiger Verteilung der Rollen (20, 20') auf dem Rollenteilkreis ein minimaler Abstand $RA_{min}$ zwischen zwei benachbarten Rollen (20, 20') als mm-Wert nachfolgender Dimensionierung entspricht:

$$RA_{min} \leq 0{,}13 \cdot \left( \log_{10}\left( P \cdot D_w \right) \right)^{2,7} \; ;$$

wobei
für den Rollenteilkreisdurchmesser P und den Rollendurchmesser $D_w$ deren mm-Werte als dimensionslose Größen einzusetzen sind.

7. Zylinderrollenlager nach einem der Ansprüche 1 bis 6, wobei der Käfig (10, 10') derart gestaltet ist, dass eine Anzahl von Rollen (20, 20') einem auf eine ganze Zahl abgerundeten Wert Z plus wenigstens einer weiteren Rolle (20, 20') entspricht, wobei

$$Z = \frac{\pi}{\arcsin \dfrac{2 \cdot X + Y + W}{P}}$$

mit

$$X = 0{,}16 \cdot \sqrt{D_w} \, ,$$

Y = 0,55 , falls $0{,}06\, D_w \leq 0{,}5$ , ansonsten $Y = 0{,}06 \cdot D_w$ und

$$W = 0{,}021 \cdot \sqrt[3]{D_w \cdot P} + D_w \; ;$$

wobei

für den Rollenteilkreisdurchmesser P und den Rollendurchmesser $D_w$ deren mm-Werte als dimensionslose Größen einzusetzen sind.

8. Zylinderrollenlager nach einem der Ansprüche 1 bis 7, wobei der Käfig (10, 10') an wenigstens einer seiner axialen Enden nach innen und/oder außen hin ringartig verdickt ausgebildet ist.

**9.** Zylinderrollenlager nach einem der Ansprüche 1 bis 8, wobei der Käfig (10, 10') aus einem ringartigen Rohling hergestellt ist.

**10.** Zylinderrollenlager nach einem der Ansprüche 1 bis 9, wobei Fenster des Käfigs (10, 10') durch ein Strahlschneiden hergestellt sind.

**11.** Zylinderrollenlager nach Anspruch 10, wobei der Strahl ein Laserstrahl ist.

**12.** Zylinderrollenlager nach einem der Ansprüche 1 bis 11, wobei das Lager derart gestaltet ist, dass ein auf Durchmessergrößen zu beziehendes Spiel $S_C$ des Käfigs (10, 10') als mm-Wert nachfolgender Dimensionierung entspricht:

$$0,005 \cdot \left(\log_{10}\left(P \cdot D_W\right)\right)^{2,55} \leq S_C \leq 0,1 \cdot \left(\log_{10}\left(P \cdot D_W\right)\right)^{2,55};$$

wobei
für den Rollenteilkreisdurchmesser P und den Rollendurchmesser $D_W$ deren mm-Werte als dimensionslose Größen einzusetzen sind.

**13.** Zylinderrollenlager nach Anspruch 12, wobei das Lager für eine Schulterführung des Käfigs (10, 10') an wenigstens einer Schulter eines Innen- oder Außenrings des Wälzlagers ausgebildet ist.

**14.** Zylinderrollenlager nach Anspruch 12, wobei das Lager für eine Rollenführung des Käfigs (10, 10') ausgebildet ist.

**15.** Zylinderrollenlager nach einem der Ansprüche 12 bis 14, wobei das Lager für eine Mischführung des Käfigs (10, 10'), die uneindeutig zwischen reiner Schulterführung und reiner Rollenführung liegt, ausgebildet ist.

**16.** Zylinderrollenlager nach einem der Ansprüche 1 bis 15, wobei eine Rollenaufhahmeöffnung wenigstens einer der Käfigtaschen in ihren axialen Endbereichen gegenüber einem Mittenbereich, in Umfangsrichtung gemessen, verbreitert ausgebildet ist.

**17.** Zylinderrollenlager nach Anspruch 16, wobei die Verbreiterung vom Mittenbereich ausgehend in wenigstens einem der axialen Endbereiche trichter- oder trompetenartig ausgebildet ist.

**18.** Zylinderrollenlager nach Anspruch 17, wobei eine Krümmung des Trichters bzw. der Trompete derart gewählt ist, dass auch bei maximaler Schrägstellung der Rolle (20, 20') in der Käfigtasche ein Berühren eines Mantelbereichs der Rolle (20, 20'), von dem aus die Rolle (20, 20') in eine ihrer Stirnflächen übergeht, mit dem Käfig (10, 10') verhindert wird.

**Claims**

**1.** Cylindrical roller bearing having a window cage (10, 10'), containing the following features:

- the cage (10, 10') is configured in one piece and so as to be closed in itself radially,
- the cage (10, 10') is designed in such a way that mutual contact of the rollers (20, 20') is prevented, and
- the cylindrical roller bearing is configured in such a way that the cage (10, 10') which is configured in this way can be installed into the cylindrical roller bearing in a manner which is free from deformation or disassembly,

**characterized in that**

- the cage (10, 10') is free from means for captive holding of the rollers (20, 20') in the cage (10, 10'), and
- the cage (10, 10') extends between two adjacent rollers (20, 20') exclusively in a region with a trapezoidal cross section, which region is directed from the roller pitch circle towards the outside or the inside.

**2.** Cylindrical roller bearing according to Claim 1, an opening angle $\alpha$ of a cage pocket in a cage (10, 10') which extends between adjacent rollers (20, 20') exclusively in a region which is directed inwards from the roller pitch circle corresponding to the following dimensioning in radians:

$$\pi - 2 \cdot \arccos \frac{P^2 + D_W^2 - D_{max}^2}{2 \cdot D_W \cdot P} \le \alpha \le \pi - 2 \cdot \arccos \frac{P^2 + D_W^2 - D_{min}^2}{2 \cdot D_W \cdot P} \quad,$$

in particular

$$\tfrac{36}{35}\pi - 2 \cdot \arccos \frac{P^2 + D_W^2 - D_{max}^2}{2 \cdot D_W \cdot P} \le \alpha \le \tfrac{35}{36}\pi - 2 \cdot \arccos \frac{P^2 + D_W^2 - D_{min}^2}{2 \cdot D_W \cdot P} \quad;$$

wherein, for the roller pitch circle diameter P, the roller diameter $D_{W}$, the cage internal diameter $D_{min}$ which is taken in the insertion region of the rollers (20, 20'), and the cage external diameter $D_{max}$ which is taken in the insertion region of the rollers (20, 20'), their mm values are to be used as dimensionless values.

3. Cylindrical roller bearing according to Claim 1, an opening angle $\alpha$ of a cage pocket in a cage (10, 10') which extends between adjacent rollers (20, 20') exclusively in a region which is directed outwards from the roller pitch circle corresponding to the following dimensioning in radians:

$$2 \cdot \arccos \frac{P^2 + D_W^2 - D_{min}^2}{2 \cdot D_W \cdot P} - \pi \le \alpha \le 2 \cdot \arccos \frac{P^2 + D_W^2 - D_{max}^2}{2 \cdot D_W \cdot P} - \pi \quad,$$

in particular

$$2 \cdot \arccos \frac{P^2 + D_W^2 - D_{min}^2}{2 \cdot D_W \cdot P} - \tfrac{36}{37}\pi \le \alpha \le 2 \cdot \arccos \frac{P^2 + D_W^2 - D_{max}^2}{2 \cdot D_W \cdot P} - \tfrac{37}{36}\pi \quad;$$

wherein, for the roller pitch circle diameter P, the roller diameter $D_{W}$, the cage internal diameter $D_{min}$ which is taken in the insertion region of the rollers (20, 20'), and the cage external diameter $D_{max}$ which is taken in the insertion region of the rollers (20, 20'), their mm values are to be used as dimensionless values.

4. Cylindrical roller bearing according to one of Claims 1 to 3, the cage (10, 10') being made from a steel.

5. Cylindrical roller bearing according to one of Claims 1 to 4, the cage (10, 10') being designed in such a way that direct contact of two adjacent rollers (20, 20') is prevented reliably.

6. Cylindrical roller bearing according to one of Claims 1 to 5, the cage (10, 10') being configured in such a way that, in the case of uniform distribution of the rollers (20, 20') on the roller pitch circle, a minimum spacing $RA_{min}$ between two adjacent rollers (20, 20') corresponds to the following dimensioning as a mm value:

$$RA_{min} \le 0.13 \cdot (\log_{10}(P \cdot D_W))^{2.7};$$

wherein,
for the roller pitch circle diameter P and the roller diameter $D_{W}$, their mm values are to be used as dimensionless variables.

7. Cylindrical roller bearing according to one of Claims 1 to 6, the cage (10, 10') being designed in such a way that a number of rollers (20, 20') corresponds to a value Z which is rounded up to an integer plus at least one further roller (20, 20'), wherein

$$Z = \frac{\pi}{\arcsin \dfrac{2 \cdot X + Y + W}{P}}$$

where

$$X = 0.16 \cdot \sqrt{D_W},$$

$Y = 0.55$ if $0.06 \cdot D_W \le 0.5$, otherwise $Y = 0.06 \cdot D_W$, and

$$W = 0.021 \cdot \sqrt[3]{D_W \cdot P} + D_W + D_W;$$

wherein,

for the roller pitch circle diameter P and the roller diameter $D_W$, their mm values are to be used as dimensionless variables.

8. Cylindrical roller bearing according to one of Claims 1 to 7, the cage (10, 10') being of inwardly and/or outwardly thickened configuration in a ring-like manner at at least one of its axial ends.

9. Cylindrical roller bearing according to one of Claims 1 to 8, the cage (10, 10') being produced from a ring-like blank.

10. Cylindrical roller bearing according to one of Claims 1 to 9, windows of the cage (10, 10') being produced by way of beam/jet cutting.

11. Cylindrical roller bearing according to Claim 10, the beam/jet being a laser beam.

12. Cylindrical roller bearing according to one of Claims 1 to 11, the bearing being designed in such a way that a play $S_C$ of the cage (10, 10') to be related to diameter values corresponds to the following dimensioning as a mm value:

$0.005 \cdot (\log_{10}(P \cdot D_W))^{2.55} \le S_C \le 0.1 \cdot (\mathrm{Log}_{10}(P \cdot D_W))^{2.55}$ ; wherein,
for the roller pitch circle diameter P and the roller diameter $D_W$, their mm values are to be used as dimensionless variables.

13. Cylindrical roller bearing according to Claim 12, the bearing for shoulder guidance of the cage (10, 10') being configured on at least one shoulder of an inner or outer ring of the anti-friction bearing.

14. Cylindrical roller bearing according to Claim 12, the bearing being configured for roller guidance of the cage (10, 10').

15. Cylindrical roller bearing according to one of Claims 12 to 14, the bearing being configured for mixed guidance of the cage (10, 10'), which mixed guidance lies ambiguously between pure shoulder guidance and pure roller guidance.

16. Cylindrical roller bearing according to one of Claims 1 to 15, a roller receptacle opening of at least one of the cage pockets being of widened configuration in its axial end regions in comparison with a centre region, as measured in the circumferential direction.

17. Cylindrical roller bearing according to Claim 16, the widened portion being of funnel-like or trumpetlike configuration in at least one of the axial end regions, starting from the centre region.

18. Cylindrical roller bearing according to Claim 17, a curvature of the funnel or the trumpet being selected in such a way that, even in the case of maximum oblique positioning of the roller (20, 20') in the cage pocket, contact of that case region of the roller (20, 20'), from which the roller (20, 20') merges into one of its end faces, with the cage (10, 10') is prevented.

**Revendications**

1. Roulement à rouleaux cylindriques avec une cage en forme de fenêtre (10, 10'), contenant les caractéristiques suivantes :

   - la cage (10, 10') est réalisée d'un seul tenant et est fermée en soi dans le plan radial ;
   - la cage (10, 10') est réalisée de telle sorte qu'un effleurement mutuel des rouleaux (20, 20') est empêché ; et
   - le roulement à rouleaux cylindriques est réalisé de telle sorte que la cage (10, 10') ainsi réalisée peut être montée sans déformation ou coupure dans le roulement à rouleaux cylindriques ;

   **caractérisé en ce que** :

   - la cage (10, 10') est exempte de moyens de maintien imperdables des rouleaux (20, 20') dans la cage (10, 10') ; et
   - la cage (10, 10') s'étend entre deux rouleaux (20, 20') connexes exclusivement dans une zone orientée vers l'extérieur ou l'intérieur en partant du cercle primitif de rouleau, avec une section transversale en forme de trapèze.

2. Roulement à rouleaux cylindriques selon la revendication 1, dans lequel un angle d'ouverture $\alpha$ d'une poche de cage correspond, dans une cage (10, 10') s'étendant entre des rouleaux (20, 20') connexes, exclusivement dans une zone orientée vers l'intérieur en partant du cercle primitif de rouleau, dans la mesure d'arc, au dimensionnement suivant :

$$\pi - 2 \cdot \arccos \frac{P^2 + D_W^2 - D_{max}^2}{2 \cdot D_W \cdot P} \leq \alpha \leq \pi - 2 \cdot \arccos \frac{P^2 + D_W^2 - D_{min}^2}{2 \cdot D_W \cdot P},$$

   notamment

$$\frac{36}{35}\pi - 2 \cdot \arccos \frac{P^2 + D_W^2 - D_{max}^2}{2 \cdot D_W \cdot P} \leq \alpha \leq \frac{35}{36}\pi - 2 \cdot \arccos \frac{P^2 + D_W^2 - D_{min}^2}{2 \cdot D_W \cdot P};$$

   pour le diamètre de cercle primitif de rouleau P, le diamètre de rouleau $D_W$, le diamètre intérieur de cage $D_{min}$ pris dans la zone d'insertion des rouleaux (20, 20') et le diamètre extérieur de cage $D_{max}$ pris dans la zone d'insertion des rouleaux (20, 20') dont les valeurs en mm servent d'ordres de grandeur sans dimensions.

3. Roulement à rouleaux cylindriques selon la revendication 1, dans lequel un angle d'ouverture $\alpha$ d'une poche de cage correspond, dans une cage (10, 10') s'étendant entre des rouleaux (20, 20') connexes, exclusivement dans une zone orientée vers l'extérieur en partant du cercle primitif de rouleau, dans la mesure d'arc, au dimensionnement suivant :

$$2 \cdot \arccos \frac{P^2 + D_W^2 - D_{min}^2}{2 \cdot D_W \cdot P} - \pi \leq \alpha \leq 2 \cdot \arccos \frac{P^2 + D_W^2 - D_{max}^2}{2 \cdot D_W \cdot P} - \pi,$$

   notamment

$$2 \cdot \arccos \frac{P^2 + D_W^2 - D_{min}^2}{2 \cdot D_W \cdot P} - \frac{36}{37}\pi \leq \alpha \leq 2 \cdot \arccos \frac{P^2 + D_W^2 - D_{max}^2}{2 \cdot D_W \cdot P} - \frac{37}{36}\pi;$$

   pour le diamètre de cercle primitif de rouleau P, le diamètre de rouleau $D_W$, le diamètre intérieur de cage $D_{min}$ pris dans la zone d'insertion des rouleaux (20, 20') et le diamètre extérieur de cage $D_{max}$ pris dans la zone d'insertion des rouleaux (20, 20') dont les valeurs en mm servent d'ordres de grandeur sans dimensions.

**4.** Roulement à rouleaux cylindriques selon l'une quelconque des revendications 1 à 3, la cage (10, 10') étant en acier.

**5.** Roulement à rouleaux cylindriques selon l'une quelconque des revendications 1 à 4, la cage (10, 10') étant agencée de telle sorte qu'un effleurement direct de deux rouleaux (20, 20') connexes est empêché de façon sûre.

**6.** Roulement à rouleaux cylindriques selon l'une quelconque des revendications 1 à 5, la cage (10, 10') étant réalisée de telle sorte qu'en cas de répartition régulière des rouleaux (20, 20') sur le cercle primitif de rouleau, un écartement minimal $RA_{min}$ entre deux rouleaux (20, 20') connexes correspond au dimensionnement suivant servant de valeur en mm :

$RA_{min} \leq 0{,}13 \cdot (\log_{10} (P \cdot D_W))^{2,7}$;
pour le diamètre de cercle primitif de rouleau P et le diamètre de rouleau $D_W$ dont les valeurs en mm servent d'ordres de grandeur sans dimensions.

**7.** Roulement à rouleaux cylindriques selon l'une quelconque des revendications 1 à 6, la cage (10, 10') étant agencée de telle sorte qu'un nombre de rouleaux (20, 20') correspond à une valeur Z arrondie au nombre entier supérieur plus au moins un rouleau (20, 20') supplémentaire ;

$$Z = \frac{\pi}{\arcsin \dfrac{2 \cdot X + Y + W}{P}}$$

avec

$$X = 0{,}16 \cdot \sqrt{D_w} \; ;$$

Y = 0,55, si 0,06 • $D_W \leq 0{,}5$ ; sinon Y = 0,06 • $D_W$ et

$$W = 0{,}021 \cdot \sqrt[3]{D_w \cdot P} + D_w \; ;$$

pour le diamètre de cercle primitif de rouleau P et le diamètre de rouleau $D_W$ dont les valeurs en mm servent d'ordres de grandeur sans dimensions.

**8.** Roulement à rouleaux cylindriques selon l'une quelconque des revendications 1 à 7, la cage (10, 10') étant réalisée, au niveau d'au moins une de ses extrémités axiales, avec un épaississement annulaire vers l'intérieur et/ou l'extérieur.

**9.** Roulement à rouleaux cylindriques selon l'une quelconque des revendications 1 à 8, la cage (10, 10') étant fabriquée à partir d'une pièce brute de type annulaire.

**10.** Roulement à rouleaux cylindriques selon l'une quelconque des revendications 1 à 9, les fenêtres de la cage (10, 10') étant fabriquées par découpage par rayon.

**11.** Roulement à rouleaux cylindriques selon la revendication 10, le rayon étant un rayon laser.

**12.** Roulement à rouleaux cylindriques selon l'une quelconque des revendications 1 à 11, le roulement étant agencé de telle sorte qu'un jeu $S_C$ de la cage (10, 10'), se rapportant aux ordres de grandeur de diamètre, correspond au dimensionnement suivant servant de valeur en mm :

$$0{,}005 \cdot \left(\log_{10}\left(P \cdot D_w\right)\right)^{2,55} \leq S_C \leq 0{,}1 \cdot \left(\log_{10}\left(P \cdot D_w\right)\right)^{2,55} \; ;$$

pour le diamètre de cercle primitif de rouleau P et le diamètre de rouleau $D_W$ dont les valeurs en mm servent d'ordres de grandeur sans dimensions.

13. Roulement à rouleaux cylindriques selon la revendication 12, le roulement étant réalisé pour un guide d'épaulement de la cage (10, 10') au niveau d'au moins un épaulement d'une bague intérieure ou extérieure du roulement à rouleaux.

14. Roulement à rouleaux cylindriques selon la revendication 12, le roulement étant réalisé pour un guide de rouleau de la cage (10, 10').

15. Roulement à rouleaux cylindriques selon l'une quelconque des revendications 12 à 14, le roulement étant réalisé pour un guide mixte de la cage (10, 10') se situant de façon non univoque entre un guide d'épaulement pur et un guide de rouleau pur.

16. Roulement à rouleaux cylindriques selon l'une quelconque des revendications 1 à 15, une ouverture de réception de rouleau d'au moins une des poches de cage étant réalisée de façon élargie dans ses régions d'extrémité axiale par rapport à une région centrale, cet élargissement étant mesuré dans la direction périphérique.

17. Roulement à rouleaux cylindriques selon la revendication 16, l'élargissement étant réalisé en forme d'entonnoir ou de trompette en partant de la région centrale jusque dans au moins une des régions d'extrémité axiale.

18. Roulement à rouleaux cylindriques selon la revendication 17, une courbure de l'entonnoir et/ou de la trompette étant choisie de telle sorte qu'en cas de position inclinée maximale du rouleau (20, 20') dans la poche de cage, un effleurement d'une région d'enveloppe du rouleau (20, 20'), passant du rouleau (20, 20') dans une des surfaces frontales, est empêché avec la cage (10, 10').

FIG 1

FIG 2

FIG 3

EP 1 605 175 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   DE 1829610 U